# EUROPEAN PATENT APPLICATION

(11) **EP 3 726 380 A1**
(43) Date of publication of application: **21.10.2020**
(21) Application number: 18887350.9
(22) Date of filing: 14.12.2018
(51) Int. Cl.: G06F 9/451

(54) **VEHICLE-MOUNTED TERMINAL DEVICE AND DISPLAY PROCESSING METHOD FOR APPLICATION COMPONENT THEREOF**

(30) Priority: 15.12.2017 CN 201711348171
(71) Applicant: Nio Nextev Limited, Hong Kong (CN)
(72) Inventor: DAI, Chenglong, Hong Kong (CN); SHEN, Fangzhu, Hong Kong (CN); DING, Wei, Hong Kong (CN); HU, Wenxiao, Hong Kong (CN); DONG, Yiwei, Hong Kong (CN)
(74) Representative: v. Bezold & Partner Patentanwälte - PartG mbB
(86) International application number: PCT/CN2018/121059
(87) International publication number: WO 2019/114808

(57) **Abstract**

Disclosed are an onboard terminal device and a display processing method for an application component thereof, which relate to the technical field of onboard terminals. The onboard terminal device (1000) comprises: a display (10) configured to provide a first user interface (100), wherein the first user interface (100) is configured with a primary interface region (110) and at least one secondary interface region (121, 122); and a processor (20) configured to control the running of an application component, and respectively display, in the primary interface region (110) and the secondary interface display region (121, 122), at least part of core content of the corresponding application component during the running. According to the method, core content of a plurality of application components during running can be simultaneously displayed, and the plurality of application components are easy to operate.

## Description

### Technical Field

The invention relates to the technical field of onboard terminals, and relates to an onboard terminal device and a display processing method for an application component of the onboard terminal device.

### Background Art

Taking application of an onboard terminal device in a vehicle as an example, the onboard terminal device can greatly facilitate a driver user, for example, the user can be provided with a navigation function, a music play function, and the like. In addition, a lot of information about the vehicle is displayed by the onboard terminal device, for example, is displayed by an onboard central control screen.

The existing onboard terminal device is generally mounted with corresponding application components to achieve the above functions. However, the driver user mainly concentrates on driving the vehicle, which is very inconvenient to operate application components in the existing vehicle terminal device, and the existing onboard terminal device is inconvenient to simultaneously display content of a plurality of application components during running. As a result, generally, the driver user can simultaneously obtain running content information of only one application component of the vehicle terminal device, and when the user switches to select an application, an operation path is long and relatively time-consuming and laborious.

### Summary of the Invention

One objective of the invention is to simultaneously display core content of a plurality of application components on a vehicle terminal device during running.

Another objective of the invention is to improve the convenience of operating the application components on the vehicle terminal device.

To realize the above objectives or other objectives, the invention provides the technical solutions as follows.

According to a first aspect of the invention, an onboard terminal device is provided, which comprises:
a display configured to provide a first user interface, wherein the first user interface is configured with one primary interface region and at least one secondary interface region; and
a processor configured to control the running of an application component, and respectively display, in the primary interface region and the secondary interface display region, at least part of core content of the corresponding application component during the running.

In the onboard terminal device according to an embodiment of the invention, the processor is further configured to define corresponding application components respectively displayed in the primary interface region and a plurality of secondary interface regions according to the degree of user demand for using the application components during driving of a vehicle.

In the onboard terminal device according to an embodiment of the invention, the display is further configured to provide a second user interface, wherein the second user interface is configured to form a container and an alternative application component display region; and
the processor is further configured to correspondingly zoom out, in response to a user component definition instruction, the first user interface to form the container and form the alternative application component display region in at least part of region vacated after the first user interface is zoomed out.

In the onboard terminal device according to an embodiment of the invention, the processor is further configured to move, in response to the user component definition instruction, an application component displayed in the alternative application component display region to a sub-container of the container that corresponds to the primary interface region/secondary interface region to define the corresponding application component displayed in the primary interface region/secondary interface region.

In the onboard terminal device according to an embodiment of the invention, the first user interface is configured with one primary interface region and two secondary interface regions which are substantially distributed in a shape of a character " 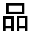 ".

In the onboard terminal device according to an embodiment of the invention, the primary interface region accounts for at least half of the first user interface.

In the onboard terminal device according to an embodiment of the invention, the primary interface region provides a first interaction element, wherein the controller is further configured to control, in response to an interaction operation on the first interaction element of the primary interface region, the at least part of core content of the corresponding application component to be displayed on the entire display in an expanding manner from being displayed in the primary interface region; and/or
the secondary interface region provides a second interaction element, wherein the controller is further configured to control, in response to an interaction operation on the second interaction element of the secondary interface region, the at least part of core content of the corresponding application component to be displayed on the entire display in an expanding manner from being displayed in the primary interface region.

In the onboard terminal device according to an embodiment of the invention, the first interaction element substantially covers the entire primary interface region, and/or the second interaction element substantially covers the entire secondary interface region.

In the onboard terminal device according to an embodiment of the invention, the processor is further configured to control display of a third interaction element for operating the corresponding application component in the primary interface region or the secondary interface region.

In the onboard terminal device according to an embodiment of the invention, the display is further configured to provide two of the first user interfaces; and
the processor is further configured to control, in response to a switching instruction, the display to display one of the two of the first user interfaces in a switching manner.

According to a second aspect of the invention, a display processing method for an application component is provided, the method being applied to an onboard terminal device and comprising the steps of:
providing a first user interface, wherein the first user interface is configured with one primary interface region and at least one secondary interface region; and
controlling the running of the application component, and respectively displaying, in the primary interface region and the secondary interface display region, at least part of core content of the corresponding application component during the running.

In the display processing method according to an embodiment of the invention, the method further comprises the step of:
defining corresponding application components respectively displayed in the primary interface region and a plurality of secondary interface regions according to the degree of user demand for using the application components during driving of a vehicle.

In the display processing method according to an embodiment of the invention, the defining step comprises:
providing a second user interface, wherein the second user interface is configured to form a container and an alternative application component display region; and
correspondingly zooming out, in response to a user component definition instruction, the first user interface to form the container and form the alternative application component display region in at least part of region vacated after the first user interface is zoomed out.

In the display processing method according to an embodiment of the invention, the defining step comprises:
moving, in response to the user component definition instruction, an application component displayed in the alternative application component display region to a sub-container of the container that corresponds to the primary interface region/secondary interface region to define the corresponding application component displayed in the primary interface region/secondary interface region.

In the display processing method according to an embodiment of the invention, in the step of providing a first user interface, the first user interface is configured with one primary interface region and two secondary interface regions which are substantially distributed in a shape of a character " 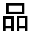 ".

In the display processing method according to an embodiment of the invention, the method further comprises the steps of:
controlling, in response to an interaction operation on the first interaction element of the primary interface region, the at least part of core content of the corresponding application component to be displayed on the entire display in an expanding manner from being displayed in the primary interface region; and/or
controlling, in response to an interaction operation on the second interaction element of the secondary interface region, the at least part of core content of the corresponding application component to be displayed on the entire display in an expanding manner from being displayed in the primary interface region.

In the display processing method according to an embodiment of the invention, the first interaction element substantially covers the entire primary interface region, and/or the second interaction element substantially covers the entire secondary interface region.

In the display processing method according to an embodiment of the invention, the step of controlling and displaying the application component comprises: controlling display of a third interaction element for operating the corresponding application component in the primary interface region or the secondary interface region.

In the display processing method according to an embodiment of the invention, the step of providing a first user interface comprises: providing two of the first user interfaces;
and the display processing method further comprises the step of: switching, in response to a switching instruction, from displaying one of the two of the first user interfaces to displaying the other of the two of the first user interfaces.

According to a third aspect of the invention, an onboard terminal device is provided, which comprises a memory, a processor, and a computer program stored on the memory and executable on the processor, wherein when the processor executes the program, the steps of any of the display processing methods described above are implemented.

According to a fourth aspect of the invention, a computer readable storage medium having a computer program stored thereon is provided, wherein the program is executed by a computer to implement the steps of any of the display processing methods described above.

According to a fifth aspect of the invention, an onboard terminal device is provided, which comprises:
a display module configured to provide a first user interface, wherein the first user interface is configured with one primary interface region and at least one secondary interface region; and
a control and display module configured to control the running of the application component, and respectively display, in the primary interface region and the secondary interface display region, at least part of core content of the corresponding application component during the running.

In the onboard terminal device according to an embodiment of the invention, the onboard terminal device further comprises:
a defining module configured to define corresponding application components respectively displayed in the primary interface region and a plurality of secondary interface regions according to the degree of user demand for using the application components during driving of a vehicle.

In the onboard terminal device according to an embodiment of the invention, the control and display module is further configured to correspondingly zoom out, in response to a user component definition instruction, the first user interface to form the container and form the alternative application component display region in at least part of region vacated after the first user interface is zoomed out.

In the onboard terminal device according to an embodiment of the invention, the defining module is further configured to move, in response to the user component definition instruction, an application component displayed in the alternative application component display region to a sub-container of the container that corresponds to the primary interface region/secondary interface region to define the corresponding application component displayed in the primary interface region/secondary interface region.

In the onboard terminal device according to an embodiment of the invention, the primary interface region provides a first interaction element, wherein the control and display module is further configured to control, in response to an interaction operation on the first interaction element of the primary interface region, the at least part of core content of the corresponding application component to be displayed on the entire display in an expanding manner from being displayed in the primary interface region; and/or
the secondary interface region provides a second interaction element, wherein the control and display module is further configured to control, in response to an interaction operation on the second interaction element of the secondary interface region, the at least part of core content of the corresponding application component to be displayed on the entire display in an expanding manner from being displayed in the primary interface region.

The foregoing features and operations of the invention will become more obvious according to the following descriptions and the accompanying drawings.

### Brief Description of the Drawings

The above-mentioned and other objectives and advantages of the invention will be more thorough and clearer from the following detailed description in conjunction with the drawings, wherein the same or similar elements are represented by the same numerals.
FIG. 1 is a schematic structural diagram of an onboard terminal device according to an embodiment of the invention.
FIG. 2 is a schematic diagram of displaying a first user interface by an onboard terminal device according to an embodiment of the invention.
FIG. 3 is a schematic diagram of a first user interface according to an embodiment of the invention.
FIG. 4 is a schematic diagram of a first user interface according to another embodiment of the invention.
FIG. 5 is a schematic diagram of a second user interface according to an embodiment of the invention.
FIG. 6 is a flowchart of a display processing method for an application component according to an embodiment of the invention.
FIG. 7 is a schematic diagram of modules of an onboard terminal device according to another embodiment of the invention.

### Detailed Description of Embodiments

The invention will be more completely described with reference to the accompanying drawings. Exemplary embodiments of the invention are shown in the accompanying drawings. However, the invention may be implemented in many different forms and should not be construed as being limited to the embodiments set forth herein. On the contrary, these embodiments are provided to make the disclosure thorough and complete and fully pass on the concept of the invention to those skilled in the art. In the drawings, the same numerals indicate the same elements or components, and thus description of these is omitted.

Some block diagrams shown in the accompanying drawings are functional entities that do not necessarily correspond to physically or logically independent entities. These functional entities may be implemented as software, one or more hardware modules or integrated circuits, or different networks and/or processor apparatuses and/or micro-controller apparatuses.

The invention is described below with reference to flowchart illustrations, block diagrams, and/or flowcharts of the method and the apparatus according to the embodiments of the invention. It should be understood that each block in the flowchart illustrations and/or the block diagrams, and a combination of the flowchart illustrations and/or the block diagrams can be implemented by computer program instructions. These computer program instructions may be provided for a processor of a general-purpose computer, a dedicated computer, or another programmable data processing device to generate a machine, so that the instructions executed by the processor of the computer or the another programmable data processing device create components for implementing the functions/operations specified in these flowcharts and/or blocks and/or one or more flow block diagrams.

These computer program instructions may be stored in a computer readable memory that can instruct a computer or another programmable processor to implement the functions in a specific manner, so that the instructions stored in the computer readable memory generate a manufactured product containing instruction components that implement the functions/operations specified in one or more blocks of the flowchart and/or the block diagram.

These computer program instructions may be loaded onto the computer or the another programmable data processor, so that a series of operations and steps are performed on the computer or the another programmable processor, thereby generating computer-implemented processes. As such, the instructions executed on the computer or the another programmable data processor provide steps for implementing the functions or operations specified in one or more blocks in the flowchart and/or block diagram. It should be further noted that, in some alternative implementations, the functions/operations shown in the blocks may not occur in the order shown in the flowchart. For example, two blocks shown in sequence can actually be executed almost simultaneously or the blocks may sometimes be executed in reverse order, depending on the involved functions/operations.

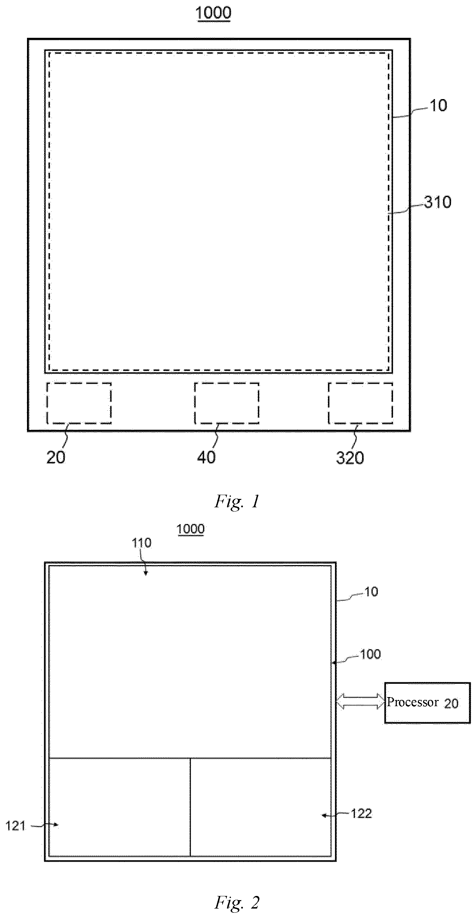

FIG. 1 shows a schematic structural diagram of an onboard terminal device according to an embodiment of the invention. FIG. 2 shows a schematic diagram of displaying a first user interface by an onboard terminal device according to an embodiment of the invention. An onboard terminal device 1000 may be mounted on a vehicle (for example, an electric vehicle or other types of vehicles). For example, the onboard terminal device may be specifically an onboard central control apparatus, and has a display 10 similar to a central control screen, so that information can be conveniently presented to, for example, a driver user.

In an embodiment, the onboard terminal device 1000 may comprise one or more displays 10, a processor 20, and a memory 40. The memory 40 may store program code that can be read by the processor 20 and executed on the processor 20 to configure the onboard terminal device 1000 to perform an operation defined by the program code. For example, the processor 20 may be configured to perform a method for operating a user interface. The processor 20 may process program code or related data that may be stored in the memory 40, and may generate output of a user interface (UI) that is to be rendered on the display 10 and the like. Each user interface UI may comprise one or more interaction elements (not shown) for implementing various functions.

In an embodiment, the onboard terminal device 1000 may further comprise one or more input sensors 112 and 114, and the input sensors 112 and 114 may be configured to provide the processor 20 with input or an instruction generated by a user. The processor 20 may analyze the user input or the user instruction to identify an interaction element of a user interface that is affected by the user input or the user instruction, and execute a function associated with the identified interaction element. For example, the processor 20 may execute a functional component or engine for defining a user interface, and provide user input for the functional component or engine of the user interface to identify an interaction element and execute a corresponding function.

Specifically, the input sensor 112 may be a touch sensor, and may be arranged on the display 10 or integrated with the display 10. In an example, the input sensor 112 may be capable of detecting direct contact of the user's finger or the like. Based on a position of the contact on the user interface 112 and a corresponding history of the interaction, such as a gesture, the processor 20 may identify a corresponding interaction element related to the current position of the contact, and may execute a function associated with the identified interaction element, which may take into account the current position or history of the interaction. For example, the user may touch an interface element and slide or move the interaction element in one direction. By removing the finger, the interaction may be completed and the interaction element may be placed at a final position. The interaction may trigger other functions defined by the associated interaction element, the user interface, or the processing component or engine thereof.

The input sensor 114 may be, but is not limited to, an acoustic input sensor, such as a microphone, and may detect a speech command comprising an indication of a required interaction element. For example, the user may use a label or any other suitable identifier to identify the required interaction element, and may also perform a required action related to the required interaction element. The processor 20 may identify the speech command and submit data representing the interaction to the user interface or the processing component or engine thereof.

Although the onboard terminal device 1000 has several components including the display 10 and the two input sensors 112 and 114, it should be understood that the onboard terminal device 1000 may further comprise other output devices of the same mode or other modes, for example, a speaker or a vibration-based haptic feedback layer, or may comprise other input sensors, for example, a keyboard, a camera, a depth sensor, an interface that can be connected to an external input device, etc.

As shown in FIGs. 1 and 2, the display 10 can be configured to provide a first UI 100, wherein the first UI 100 has a primary interface region 110, and may further have at least one secondary interface region, such as a secondary interface region 121 and a secondary interface region 122. The "primary" interface region and the "secondary" interface region are determined based on an area ratio in the first UI 100, and an area ratio of a primary interface region is larger than that of a secondary interface region, for example, the primary interface region accounts for at least half (for example, two-thirds) of the first UI 100, so that content can be displayed in more detail, and content displayed in the primary interface region can be more easily acquired by the user. The primary interface region 110, the secondary interface region 121, and the secondary interface region 122 may be defined with corresponding application components, and thus may be used to display different application components. For example, the primary interface region 110 is defined to display App1, the secondary interface region 121 is defined to display App2, and the secondary interface region 122 is defined to display App3.

In an embodiment, as shown in FIG. 2, there are two secondary interface regions. The first UI 100 is configured with a primary interface region 110 and secondary interface regions 121 and 122 which are substantially distributed in a shape of a character " 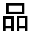 ", the primary interface region 110 is arranged at an upper portion of the character " 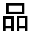 ", and the secondary interface regions 121 and 122 are arranged at a lower portion of the character " 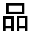 ". In another alternative embodiment, a quantity of secondary interface regions may be increased according to user needs. For example, there are three secondary interface regions which are arranged in a bottom region of the first UI 100 from left to right.

In an embodiment, as shown in FIG. 2, the processor 20 may be configured to control the running of a plurality of application components, for example, control the running of at least the application components (for example, App1, App2, and App3) displayed in the primary interface region 110, the secondary interface region 121, and the secondary interface region 122 as defined. The processor 20 may be further configured to control respective display of at least part of core content of the corresponding application components in the primary interface region 110 and the secondary interface display regions 121 and 122 during the running. "Core content" is running result information that is relatively useful to the user in content output by an application component during running, for example, navigation information in content output by a navigation application component during running, image information in content output by a reversing application component during running, or information such as a "song name" and a cover, a progress, and lyrics of currently playing content in content output by a music play application component during running. It should be noted that specific content of the core content is not limited. Different application components correspond to different core content, and core content of a same application component or core content that needs to be displayed in the primary interface region or the secondary interface display region may also vary as set.

In this way, the onboard terminal device 1000 can simultaneously run a plurality of application components and can simultaneously display core content of the plurality of application components on the first UI 100 during the running, so that the user can intuitively acquire core content of any of the plurality of application components. For example, if the user pays attention to navigation information of a navigation application component displayed in the primary interface region 110, the navigation information can be easily acquired, and if the user also pays attention to call information of a phone application component displayed in the secondary interface region, the call information can be easily acquired. In addition, acquisition of core content in any interface region does not affect display in another interface region, thereby avoiding a switching operation to be performed by the user on the running of an application component to acquire core content of the corresponding application component. Such a switching operation is particularly inconvenient for the driver user.

To further improve the user's convenience in operating the primary interface region 110 and the secondary interface regions 121 and 122, in an embodiment, the primary interface region 110 provides a first interaction element (not shown in the figure). The controller 20 is further configured to control, in response to an interaction operation on the first interaction element of the primary interface region 110, at least part of core content of a corresponding application component to be displayed on the entire display 10 in an expanding manner from being displayed in the primary interface region 110. For example, the user directly clicks on the first interaction element to perform the interaction operation (if the user needs to acquire running content of the corresponding application component in more detail), to enter full-screen running and display of App1. In this case, App1 runs normally, and the user can also operate App1 normally in a full-screen state. Similarly, the secondary interface regions 121 and 122 also provide second interaction elements (not shown in the figure). The controller 20 is further configured to control, in response to an interaction operation on the first interaction element of one of the secondary interface regions 121 and 122, at least part of core content of a corresponding application component to be displayed on the entire display 10 in an expanding manner from being displayed in the primary interface region 110. For example, the user directly clicks on the second interaction element in the secondary interface region 121 to perform the interaction operation (if the user needs to acquire running content of the corresponding application component in more detail), to enter full-screen running and display of App2. In this case, App2 runs normally, and the user can also operate App2 normally in a full-screen state.

Specifically, the first interaction element may substantially cover the entire primary interface region 101, and the second interaction element may substantially cover each of the entire secondary interface regions. In this way, the user does not need to accurately click on a small part of the primary interface region 101 or the secondary interface region to complete the interaction operation, which is convenient to operate, and can be easily completed, for example, even during the driving of a vehicle. In addition, when the user chooses to enter the corresponding application component displayed in the primary interface region 101 or the secondary interface region, the first interaction element or the second interaction element can be operated to quickly enter the application component, and an operation path is short and convenient.

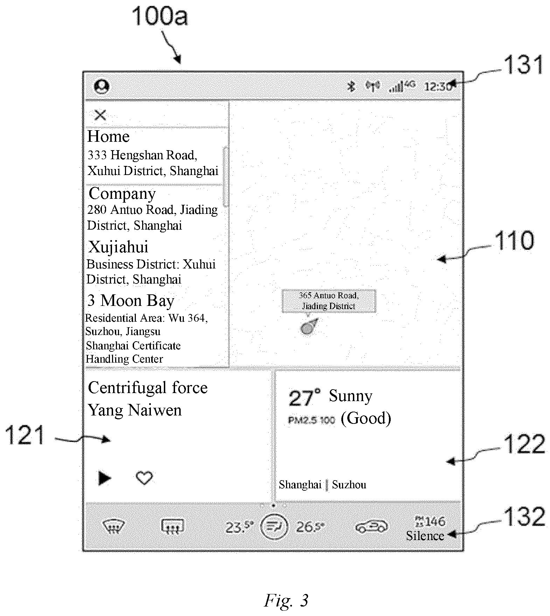

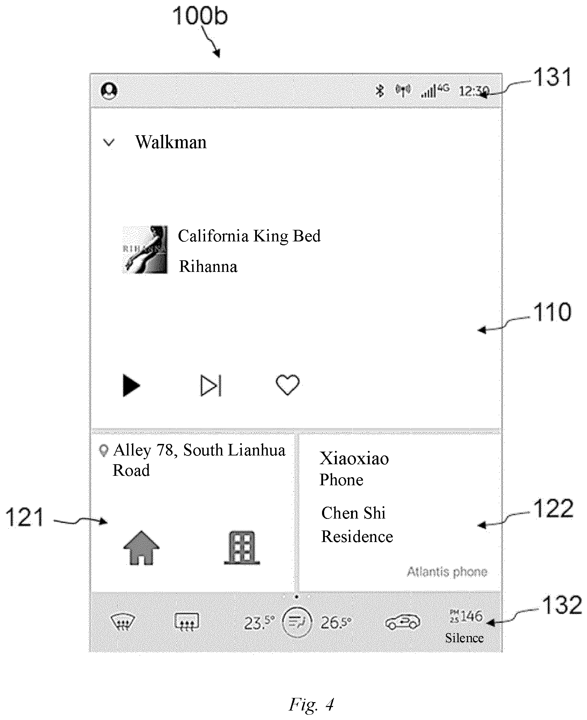

FIGs. 3 and 4 show application examples of a first UI during display of core content.

As shown in FIG. 3, a primary interface region 110 of a UI 100a is defined to display a navigation application component, and core information such as a map is updated and displayed in the primary interface region 110 in real time. A secondary interface region 121 of the UI 100a is defined to display a music application component, and core content information such as a name of a currently playing song is updated and displayed in the secondary interface region 121 in real time. A secondary interface region 122 of the UI 100a is defined to display a weather application component, and core content information such as weather information of a current position is updated and displayed in the secondary interface region 122 in real time.

As shown in FIG. 4, a primary interface region 110 of a UI 100b is defined to display a music application component, and core content information such as a name of a currently playing song is updated and displayed in the primary interface region 110 in real time. A secondary interface region 121 of the UI 100b is defined to display a navigation application component, and core information such as a navigation destination and current position information is updated and displayed in the secondary interface region 121 in real time. A secondary interface region 122 of the UI 100b is defined to display a phone application component, and core information such as a user name of a connected mobile phone is updated and displayed in the secondary interface region 122 in real time.

As shown in FIGs. 3 and 4, the UI 100a and the UI 100b may further comprise a status bar region 131, and may even comprise an information bar region 132. Content displayed in the status bar region 131 or the information bar region 132 is not limited, and may be defined by the user. The content displayed in the status bar region 131 or the information bar region 132 is relatively independent of the content displayed in the primary interface region 110 and the secondary interface regions 121 and 122. In other words, a change in the content displayed in the primary interface region 110 and the secondary interface regions 121 and 122 do not affect the content displayed in the status bar region 131 or the information bar region 132.

In an embodiment, as shown in FIGs. 3 and 4, on the UI 100a and the UI 100b, a third interaction element for operating the corresponding application component is also displayed, for example, third interaction elements such as "pause" and "play" for operating a music application component. The third interaction element may be presented in a form of a virtual key, and may be an operation key commonly used on the application component. A specific type of the third interaction element is not limited. The setting of the third interaction element can further reduce the user's operation path for operating a corresponding application component displayed in the primary interface region 101 or the secondary interface region, and improve the operation convenience.

It can be seen from FIGs. 3 and 4 that, application components displayed in primary interface regions 110 of both first UIs 100 may be different, and application components displayed in the secondary interface regions of both first UIs 100 may also be different. In other words, the application components may be defined by the user. The processor 20 is further configured to define corresponding application components respectively displayed in the primary interface region 110 and a plurality of secondary interface regions (for example, the secondary interface regions 121 and 122) according to the degree of user demand for using the application components during driving of a vehicle. The driver user relatively concentrates on use of selected application components when driving the vehicle, for example, a navigation application component, a phone application component, a music play application component, a broadcast application component, etc. In other words, levels of usage demands for using these application components are higher. When the primary interface region 110 and the plurality of secondary interface regions are defined to respectively display these application components with higher levels of demands, more intuitive and favorable information can be provided for the driver user, thereby facilitating the driver user in operating these application components with higher levels of demands. Generally, levels of user demands for using application components corresponding to the primary interface region 110 are higher than levels of user demands for using application components corresponding to each secondary interface region.

As an example, as shown in FIG. 3, if the user has the highest level of demands for using the navigation application component, the navigation application component may be defined as the application component displayed in the primary interface region 110, and core content such as navigation information of the navigation application component may be conveniently imaged in the primary interface region 110, so that the user can operate the navigation application component conveniently and quickly. If the user has the second highest level of demands for using the music play application component, the music play application component may be defined as the application component displayed in the secondary interface region 121, and core content such as a music name of the music play application component may be conveniently imaged in the secondary interface region 121, so that the user can also operate the music play application component conveniently and quickly. Therefore, the user experience can be greatly improved.

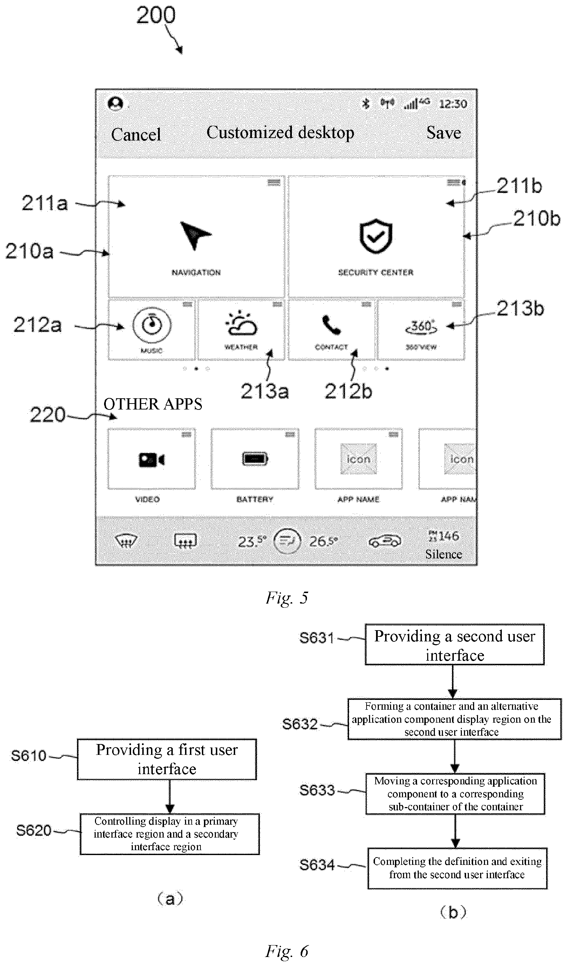

FIG. 5 shows a schematic diagram of a second user interface according to an embodiment of the invention. In an embodiment, the above defining process may be completed by means of a second UI 200 shown in FIG. 5. Specifically, the display 10 is further configured to provide the second UI 200, wherein the second UI 200 is used to form a container 211 and an alternative application component display region 220. For example, if two of the first UIs 100 need to be defined, there may be correspondingly two containers 211: a container 211a and a container 211b. In response to a user component definition instruction, the processor 20 may correspondingly zoom out the first UI 100 to form the container 211, and may form the alternative application component display region 220 in at least part of region vacated after the first UI 100 is zoomed out. The user component definition instruction may be implemented through an interaction operation of the user, for example, touching and holding the first UI 100.

A structure of the container 211 may be set according to a structure of the first UI 100. For example, the container 211 comprises a sub-container 211, which corresponds to the primary interface region 110 of the first UI 100; the container 211 comprises a sub-container 212, which corresponds to the secondary interface region 121 of the first UI 100; and the container 211 comprises a sub-container 213, which corresponds to the secondary interface region 122 of the first UI 100. The sub-containers 211, 212, and 213 may also be arranged in a shape of a character " 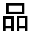 ".

During the defining operation, in response to the user component definition instruction, the processor 20 may further move an application component displayed in the alternative application component display region 220 to a sub-container (for example, the sub-container 211, 212, or 213) of the container 211 that corresponds to the primary interface region/secondary interface region to define the corresponding application component displayed in the primary interface region/secondary interface region. As an example, various application components installed in the onboard terminal device 1000 are displayed in the alternative application component display region 220 and the displayed application components may be selected through left and right sliding. The user selects and drags a certain application component in the display region 220 to the sub-container 212b of the container 210, and the sub-container 212b is defined by the corresponding application component in the secondary interface region 121. Similarly, sub-containers 211a, 212a, and 213a and sub-containers 211b and 213b may be all defined by selected application components. Therefore, a display defining process of the application component in the primary interface region/secondary interface region of the first UI 100 can be conveniently completed, and can be easily modified.

It should be noted that the onboard terminal device 1000 is not limited to displaying and processing of one first UI 100 in the above examples, and the onboard terminal device 1000 may display and process a plurality of first UIs 100 and onboard terminal devices 1000 in a switching manner. As an example, the display 10 may further provide two of the first UIs 100, and in response to a switching instruction (for example, a sliding operation), the processor 20 may further control the display 10 to display one of the two of the first UIs 100 in a switching manner. For example, one first UI 100 is displayed by default, and is switched to the other first UI 100 when the user performs the sliding operation. According to the degree of user demand for using application components during driving of a vehicle, application components displayed on the two of the first UIs 100 may be respectively defined. For example, an application component displayed in a primary interface region 110 of the first UI 100 displayed by default has a higher level of usage demands than an application component displayed in a primary interface region 110 of the other first UI 100.

FIG. 6 shows a flowchart of a display processing method for an application component according to an embodiment of the invention. FIG. 6(a) shows a display processing method for an application component. FIG. 6(b) shows a definition method process in the display processing method for the application component.

First, the definition method process in FIG. 6(b) is described.

Step S631: a second UI 200 similar to that shown in FIG. 5 is provided, wherein the second UI 200 is used to form a container 210 (for example, containers 210a and 210b corresponding to different first UIs 100) and an alternative application component display region 220.

Step S632: In response to a user component definition instruction (for example, touching and holding the first UI 100), the first UI 100 is correspondingly zoomed out to form the container 210 and form the alternative application component display region 220 in at least part of region vacated after the first UI 100 is zoomed out. The component display region 220 may display a plurality of alternative application components.

Step S633: In response to the user component definition instruction, an application component displayed in the alternative application component display region 220 is moved to a sub-container (for example, a sub-container 211a/212a) of the container 210 that corresponds to a primary interface region/secondary interface region to define the corresponding application component displayed in the primary interface region/secondary interface region. As an example, a user selects and drags a certain application component in the display region 220 to a sub-container 212b of the container 210, and the sub-container 212b is defined by a corresponding application component in a secondary interface region 121. Similarly, sub-containers 211a, 212a, and 213a and sub-containers 211b and 213b may be all defined by selected application components.

Step S634: the definition is completed and the second UI 200 is exited.

Further, the display processing method for the application component in FIG. 6(a) is described.

Step S610: a first UI 100 is provided, wherein the first UI 100 is configured with one primary interface region 110 and at least one secondary interface region (as shown in FIG. 2).

Step S620: the running of application components predefined to be displayed in the primary interface region 110 and secondary interface regions 121 and 122 is controlled, and at least part of core content of the corresponding application components during the running are respectively displayed in the primary interface region 110 and the secondary interface display regions 121 and 122 (for example, as shown in FIG. 3 or 4).

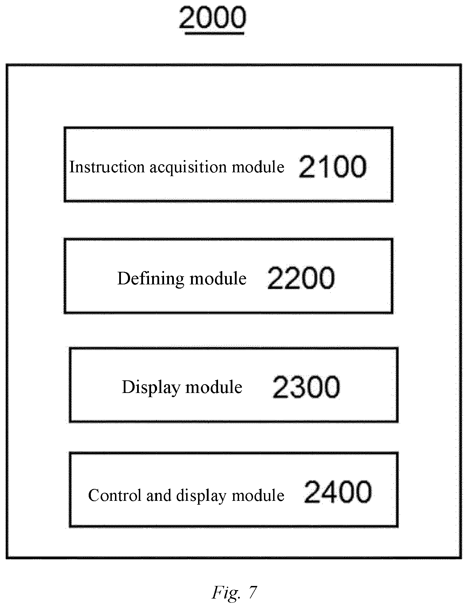

FIG. 7 shows a schematic diagram of modules of an onboard terminal device according to another embodiment of the invention. As shown in FIG. 7, an onboard terminal device 2000 has an instruction acquisition module 2100 configured to acquire various instructions input by a user, for example, a user component definition instruction, a switching instruction, etc. described above. Specifically, the instruction acquisition module may acquire a corresponding instruction by receiving input of a user's interaction operation on an interaction element.

The onboard terminal device 2000 has a display module 2300, and the display module 2300 may provide various UIs, and may particularly provide one or more first UIs 100 (as shown in FIG. 2). The first UI 100 is configured with one primary interface region 110 and at least one secondary interface region (for example, two secondary interface regions 121 and 122).

The onboard terminal device 2000 optionally has a defining module 2200 configured to define corresponding application components respectively displayed in the primary interface region 110 and a plurality of secondary interface regions 121 and 122 according to the degree of user demand for using the application components during driving of a vehicle.

The onboard terminal device 2000 further has a control and display module 2400 configured to control the running of the corresponding application components in the primary interface region 110 and the plurality of secondary interface regions 121 and 122, and respectively display, in the primary interface region 110 and the secondary interface display regions, at least part of core content of the corresponding application components during the running.

It should be noted that the onboard terminal device 1000 or 2000 of the above embodiment may be implemented by, but not limited to, a Wedget technology, and both the first UI 100 and display content thereof may be set and displayed personally.

It should be understood that although an example in which the above onboard terminal device 1000 or 2000 is applied to the vehicle is used for description, those skilled in the art will understand that the onboard terminal device 1000 or 2000 can be analogously applied to other means of transportation similar to the vehicle (for example, a rail vehicle that requires a driving operation), and can achieve substantially similar effects.

It should be noted that, in some alternative implementations, the functions/operations shown in the blocks may not occur in the order shown in the flowchart. For example, two blocks shown in sequence can actually be executed almost simultaneously or the blocks may sometimes be executed in reverse order, depending on the involved functions/operations. Although a specific order of the steps is shown, disclosed, and required, it should be understood that the steps can be implemented, separated, or combined in any order, unless otherwise specified, and will still benefit from the disclosure.

This specification uses examples to disclose the invention, comprising the best mode, and also to enable any person skilled in the art to practice the invention, comprising making and using any apparatus or system and performing any covered method. The patent protection scope of the invention is defined by the claims, and may comprise other examples conceived by those skilled in the art. If such other examples have structural elements that are not different from the literal language of the claims, or comprise equivalent structural elements that are not substantially different from the literal language of the claims, the examples are intended to be within the scope of the claims.

## Claims

1. An onboard terminal device, **characterized by** comprising:
a display configured to provide a first user interface, wherein the first user interface is configured with one primary interface region and at least one secondary interface region; and
a processor configured to control the running of an application component, and respectively display, in the primary interface region and the secondary interface display region, at least part of core content of the corresponding application component during the running.

2. The onboard terminal device according to claim 1, **characterized in that** the processor is further configured to define corresponding application components respectively displayed in the primary interface region and a plurality of secondary interface regions according to the degree of user demand for using the application components during driving of a vehicle.

3. The onboard terminal device according to claim 2, **characterized in that** the display is further configured to provide a second user interface, wherein the second user interface is configured to form a container and an alternative application component display region; and
the processor is further configured to correspondingly zoom out, in response to a user component definition instruction, the first user interface to form the container and form the alternative application component display region in at least part of region vacated after the first user interface is zoomed out.

4. The onboard terminal device according to claim 3, **characterized in that** the processor is further configured to move, in response to the user component definition instruction, an application component displayed in the alternative application component display region to a sub-container of the container that corresponds to the primary interface region/secondary interface region to define the corresponding application component displayed in the primary interface region/secondary interface region.

5. The onboard terminal device according to claim 1, **characterized in that** the first user interface is configured with one primary interface region and two secondary interface regions which are substantially distributed in a shape of a character " 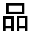 ".

6. The onboard terminal device according to claim 5, **characterized in that** the primary interface region accounts for at least half of the first user interface.

7. The onboard terminal device according to claim 1, **characterized in that** the primary interface region provides a first interaction element, wherein the controller is further configured to control, in response to an interaction operation on the first interaction element of the primary interface region, the at least part of core content of the corresponding application component to be displayed on the entire display in an expanding manner from being displayed in the primary interface region; and/or
the secondary interface region provides a second interaction element, wherein the controller is further configured to control, in response to an interaction operation on the second interaction element of the secondary interface region, the at least part of core content of the corresponding application component to be displayed on the entire display in an expanding manner from being displayed in the primary interface region.

8. The onboard terminal device according to claim 7, **characterized in that** the first interaction element substantially covers the entire primary interface region, and/or the second interaction element substantially covers the entire secondary interface region.

9. The onboard terminal device according to claim 1, **characterized in that** the processor is further configured to control display of a third interaction element for operating the corresponding application component in the primary interface region or the secondary interface region.

10. The onboard terminal device according to claim 1, **characterized in that** the display is further configured to provide two of the first user interfaces; and
the processor is further configured to control, in response to a switching instruction, the display to display one of the two of the first user interfaces in a switching manner.

11. A display processing method for an application component, the method being applied to an onboard terminal device, **characterized by** comprising the steps of:
providing a first user interface, wherein the first user interface is configured with one primary interface region and at least one secondary interface region; and
controlling the running of the application component, and respectively displaying, in the primary interface region and the secondary interface display region, at least part of core content of the corresponding application component during the running.

12. The display processing method according to claim 11, **characterized by** further comprising the step of:
defining corresponding application components respectively displayed in the primary interface region and a plurality of secondary interface regions according to the degree of user demand for using the application components during driving of a vehicle.

13. The display processing method according to claim 12, **characterized in that** the defining step comprises:
providing a second user interface, wherein the second user interface is configured to form a container and an alternative application component display region; and
correspondingly zooming out, in response to a user component definition instruction, the first user interface to form the container and form the alternative application component display region in at least part of region vacated after the first user interface is zoomed out.

14. The display processing method according to claim 13, **characterized in that** the defining step comprises:
moving, in response to the user component definition instruction, an application component displayed in the alternative application component display region to a sub-container of the container that corresponds to the primary interface region/secondary interface region to define the corresponding application component displayed in the primary interface region/secondary interface region.

15. The display processing method according to claim 11, **characterized in that** in the step of providing a first user interface, the first user interface is configured with one primary interface region and two secondary interface regions which are substantially distributed in a shape of a character " 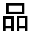 ".

16. The display processing method according to claim 11, **characterized by** further comprising the steps of:
controlling, in response to an interaction operation on the first interaction element of the primary interface region, the at least part of core content of the corresponding application component to be displayed on the entire display in an expanding manner from being displayed in the primary interface region; and/or
controlling, in response to an interaction operation on the second interaction element of the secondary interface region, the at least part of core content of the corresponding application component to be displayed on the entire display in an expanding manner from being displayed in the primary interface region.

17. The display processing method according to claim 16, **characterized in that** the first interaction element substantially covers the entire primary interface region, and/or the second interaction element substantially covers the entire secondary interface region.

18. The display processing method according to claim 11, **characterized in that** the step of controlling and displaying the application component comprises: controlling display of a third interaction element for operating the corresponding application component in the primary interface region or the secondary interface region.

19. The display processing method according to claim 11, **characterized in that** the step of providing a first user interface comprises: providing two first user interfaces;
and the display processing method further comprises the step of: switching, in response to a switching instruction, from displaying one of the two of the first user interfaces to displaying the other of the two of the first user interfaces.

20. An onboard terminal device, **characterized by** comprising a memory, a processor, and a computer program stored on the memory and executable on the processor, **characterized in that** when the processor executes the program, the steps of the display processing method according to any of claims 11 to 19 are implemented.

21. A computer readable storage medium having a computer program stored thereon, **characterized in that** the program is executed by a computer to implement the steps of the method according to any one of claims 11 to 19.
